(19) Europäisches Patentamt
European Patent Office
Office européen des brevets

(11) Veröffentlichungsnummer : **0 068 257**
**B1**

(12) **EUROPÄISCHE PATENTSCHRIFT**

(45) Veröffentlichungstag der Patentschrift : **24.04.85**

(51) Int. Cl.[4] : **C 08 F 10/00**, C 08 F 4/64

(21) Anmeldenummer : **82105165.3**

(22) Anmeldetag : **14.06.82**

(54) **Verfahren zur Herstellung eines Polymerisations Katalysators und seine Verwendung zur Polymerisation von 1-Olefinen.**

(30) Priorität : **20.06.81 DE 3124223**

(43) Veröffentlichungstag der Anmeldung : **05.01.83 Patentblatt 83/01**

(45) Bekanntmachung des Hinweises auf die Patenterteilung : **24.04.85 Patentblatt 85/17**

(84) Benannte Vertragsstaaten : **BE DE FR GB IT NL**

(56) Entgegenhaltungen : **DE-A- 2 000 566**

(73) Patentinhaber : **HOECHST AKTIENGESELLSCHAFT**
**Postfach 80 03 20**
**D-6230 Frankfurt am Main 80 (DE)**

(72) Erfinder : **Berthold, Joachim, Dr.**
**Talblick 3**
**D-6239 Eppstein/Taunus (DE)**
Erfinder : **Diedrich, Bernd, Dr.**
**Ulmenweg 10**
**D-6236 Eschborn (DE)**
Erfinder : **Franke, Rainer, Dr.**
**Ginsterweg 18A**
**D-6272 Niedernhausen/Taunus (DE)**
Erfinder : **Hartlapp, Jürgen, Dr.**
**Leonhardstrasse 5A**
**D-6234 Hattersheim am Main (DE)**
Erfinder : **Schäfer, Werner, Dr.**
**Rosenstrasse 10**
**D-6238 Hofheim am Taunus (DE)**
Erfinder : **Strobel, Wolfgang, Dr.**
**Ubierstrasse 39**
**D-6238 Hofheim am Taunus (DE)**

**EP 0 068 257 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Bekannt sind Verfahren zur Herstellung von Polyolefinen mittels Katalysatoren, die durch Umsetzung von Magnesiumalkoholaten und/oder komplexen Magnesiumalkoholaten mit Übergangsmetallhalogeniden gebildet werden. (DE-AS 1 795 197, DE-AS 1 957 679, DE-OS 2 000 566).

In einem Fall wird für die Umsetzung der Magnesiumverbindung und der chlorhaltigen Titanverbindung ein Temperaturbereich von 0 bis 200 °C empfohlen, jedoch soll die obere Temperaturgrenze dabei so gewählt werden, daß keine Zersetzungsprodukte gebildet werden. Als Vorteil wird neben der hohen Aktivität der Polymerisationskatalysatoren besonders auf die Möglichkeit zur Darstellung von Ethylen-Homopolymerisaten und Ethylen-α-Olefin-Copolymerisaten mit enger Molekulargewichtsverteilung hingewiesen (DE-AS 1 795 197, DE-AS 1 957 679).

Im anderen Fall erfolgt die Umsetzung des Metallalkoholats mit der Übergangsmetallverbindung in Gegenwart oder Abwesenheit eines inerten Verdünnungsmittels bei Temperaturen von 40 bis 210 °C ; die Reaktionsdauer der Umsetzung liegt im allgemeinen zwischen 5 und 240 Minuten (DE-OS 2 000 566). Vor einer längeren Reaktionsdauer wird ausdrücklich gewarnt, da sie eine Verschlechterung der Eigenschaften des Katalysators bewirke. Auch in dieser Druckschrift wird als Vorteil der Katalysatoren die hohe Aktivität und die Möglichkeit zur Herstellung von Polyolefinen mit enger Molekulargewichtsverteilung genannt. Gleichzeitig wird ein Katalysator beschrieben, der durch Umsetzung von Magnesiumethylat mit Vanadiumtetrachlorid erhalten wird und ein Polyethylen mit breiter Molekulargewichtsverteilung ergibt. Vanadiumverbindungen haben jedoch den großen Nachteil, daß sie im Gegensatz zu Titanverbindungen außerordentlich giftig sind. Die Vanadiumverbindungen enthaltenden Produkte sind daher nur begrenzt einsatzfähig. Bei technischen Polymerisationsverfahren ergeben sich daher bei dem Einsatz von Vanadiumverbindungen außerdem hohe Kosten bei der Aufarbeitung der Kontaktmutterlaugen.

Es bestand somit die Aufgabe, Polymerisationskatalysatoren auf Basis eines Magnesiumalkoholats zu finden, mittels derer man Polyolefine mit breiter Molekulargewichtsverteilung in hoher Ausbeute herstellen kann.

Es wurde nun gefunden, daß man auch mit den Umsetzungsprodukten von Magnesiumalkoholaten mit Titantetrachlorid Polyolefine mit breiter Molekulargewichtsverteilung und sehr hoher Ausbeute erhalten kann, wenn man die Reaktion zwischen dem Magnesiumalkoholat und dem Titantetrachlorid bei einer relativ niedrigen Temperatur durchführt und anschließend das Reaktionsgemisch bei einer höheren Temperatur zur Abspaltung von Alkylchloriden thermisch behandelt.

Gegenstand der Erfindung ist daher ein Verfahren zur Herstellung eines Polymerisationskatalysators, der aus dem Umsetzungsprodukt eines Magnesiumalkoholats mit Titantetrachlorid (Komponente A) und einer metallorganischen Verbindung der Gruppe I bis III des Periodensystems (Komponente B) besteht, dadurch gekennzeichnet, daß man zur Herstellung der Komponente A in einer ersten Reaktionsstufe ein Magnesiumalkoholat mit Titantetrachlorid in einem inerten Kohlenwasserstoff bei einer Temperatur von 50 bis 100 °C umsetzt, das gebildete Reaktionsgemisch in einer zweiten Reaktionsstufe bei einer Temperatur von 110 bis 200 °C einer thermischen Behandlung unterwirft, bis keine Alkylchloridabspaltung mehr erfolgt, und danach den Feststoff durch mehrmaliges Waschen mit einem Kohlenwasserstoff von löslichen Reaktionsprodukten befreit.

Gegenstand der Erfindung ist aber auch seine Verwendung zur Polymerisation von 1-Olefinen.

Zur Herstellung der Komponente A wird ein Magnesiumalkoholat verwendet.

Dieses Magnesiumalkoholat kann ein « einfaches » Magnesiumalkoholat der Formel $Mg(OR)_2$ sein, in der R gleiche oder verschiedene Alkylreste mit 1 bis 6 Kohlenstoffatomen bedeutet. Beispiele sind $Mg(OC_2H_5)_2$, $Mg(OiC_3H_7)$, $Mg(OnC_3H_7)_2$, $Mg(OnC_4H_9)_2$, $Mg(OCH_3)(OC_2H_5)$, $Mg(OC_2H_5)(OnC_3H_7)$.

Es kann auch ein « einfaches » Magnesiumalkoholat der Formel $Mg(OR)_nX_m$ verwendet werden, in der X = Halogen, $(SO_4)_{1/2}$, OH, $(CO_3)_{1/2}$, $(PO_4)_{1/3}$, Cl ist, R die oben genannte Bedeutung hat und n + m = 2 ist.

Es kann jedoch auch ein « komplexes » Magnesiumalkoholat eingesetzt werden.

Als « komplexes » Magnesiumalkoholat wird ein Magnesiumalkoholat bezeichnet, das neben Magnesium mindestens ein Metall der 1. bis 4. Hauptgruppe des Periodensystems enthält. Beispiele für ein derartiges komplexes Magnesiumalkoholat sind :

$[Mg(OiC_3H_7)_4]Li_2$ ; $[Al_2(OiC_3H_7)_8]Mg$ ; $[Si(OC_2H_5)_6]Mg$ ;
$[Mg(OC_2H_5)_3]Na$ ; $[Al_2(OiC_4H_9)_8]Mg$ ;
$[Al_2(O\text{-}secC_4H_9)_6(OC_2H_5)_2]Mg$.

Die Herstellung der komplexen Magnesiumalkoholate (Alkoxosalze) erfolgt nach bekannter Methode (Lit. : Meerwein, Ann. *455* (1927) Seite 234, 476 ; (1929) Seite 113 ; Houben-Weyl, Methoden der organischen Chemie, Band 6/2 Seite 30. Für die Herstellung des komplexen Magnesiumalkoholats seien folgende Beispiele genannt :

1. Man läßt zwei Metallalkoholate in einem geeigneten Lösungsmittel aufeinander einwirken, zum Beispiel

$$2Al(OR)_3 + Mg(OR)_2 \rightarrow [Al_2(OR)_8]Mg$$

2. Auflösen von Magnesium in einer alkoholischen Lösung eines Metallalkoholates

$$2\ LiOR + Mg + 2\ ROH \rightarrow [Mg(OR)_4]\ Li_2 + H_2$$

3. Gleichzeitiges Auflösen zweier Metalle in Alkohol

$$8\ ROH + Mg + 2\ Al \rightarrow [Al_2(OR)_8]\ Mg + 4\ H_2$$

Bevorzugt verwendet werden die einfachen Magnesiumalkoholate, insbesondere $Mg(OC_2H_5)_2$, $Mg(OnC_3H_7)_2$ und $Mg(OiC_3H_7)_2$. Das Magnesiumalkoholat wird in reiner Form oder auf einem Träger fixiert eingesetzt.

Die Herstellung der Komponente A erfolgt in zwei Reaktionsstufen bei unterschiedlicher Temperatur.

In der ersten Reaktionsstufe wird das Magnesiumalkoholat mit Titantetrachlorid bei einer Temperatur von 50 bis 100 °C, vorzugsweise von 60 bis 90 °C, in Gegenwart eines inerten Kohlenwasserstoffs unter Rühren umgesetzt. Auf 1 Mol Magnesiumalkoholat werden 1 bis 5 Mol Titantetrachlorid eingesetzt, vorzugsweise 1,4 bis 3,5 Mol Titantetrachlorid auf 1 Mol Magnesiumalkoholat.

Als inerter Kohlenwasserstoff eignet sich ein aliphatischer oder cycloaliphatischer Kohlenwasserstoff wie Butan, Pentan, Hexan, Heptan, Isooctan, Cyclohexan, Methylcyclohexan, sowie ein aromatischer Kohlenwasserstoff wie Toluol, Xylol ; auch eine hydrierte Dieselöl- oder Benzinfraktion, die sorgfältig von Sauerstoff, Schwefelverbindungen und Feuchtigkeit befreit worden ist, ist brauchbar.

Die Reaktionsdauer in der ersten Stufe beträgt 0,5 bis 8 Stunden vorzugsweise 2 bis 6 Stunden.

In der ersten Reaktionsstufe findet ein weitgehender Austausch der Alkoxygruppen des Magnesiumalkoholats mit den Chloratomen des Titantetrachlorids statt. Als Reaktionsprodukt erhält man dabei einen kohlenwasserstoffunlöslichen magnesium- und titanhaltigen Feststoff und kohlenwasserstofflösliche, Chlor und Alkoxygruppen enthaltende Titanverbindungen.

In der zweiten Reaktionsstufe wird das erhaltene Reaktionsgemisch bei einer Temperatur von 110 bis 200 °C, vorzugsweise 110 bis 160 °C unter Rühren einer thermischen Behandlung unterzogen. Während dieser thermischen Behandlung steigt der Titangehalt des in Kohlenwasserstoffen unlöslichen Feststoffes stark an, und es findet eine Abspaltung von Alkylchloriden statt. Es wird angenommen, daß die löslichen Titanalkoxychloride unter Abspaltung von Alkylchloriden in kondensierte Titanate umgewandelt werden, die in Kohlenwasserstoffen unlöslich sind und sich auf dem Feststoff niederschlagen. Die thermische Behandlung wird so lange durchgeführt, bis keine Alkylchloridabspaltung mehr erfolgt. In der Regel ist dafür eine Reaktionsdauer von 10 bis 100 h erforderlich.

Anschließend trennt man durch mehrmaliges Waschen mit einem Kohlenwasserstoff alle löslichen Reaktionsprodukte ab und erhält einen im Kohlenwasserstoff unlöslichen, magnesium- und titanhaltigen Feststoff, der als Komponente A bezeichnet wird.

Die Herstellung des erfindungsgemäß zu verwendenden Polymerisationskatalysators erfolgt durch Zusammenbringen der Komponente A und einer metallorganischen Verbindung der Gruppe I bis III des Periodensystems (Komponente B).

Vorzugsweise verwendet man als Komponente B aluminiumorganische Verbindungen. Als aluminiumorganische Verbindungen eignen sich chlorhaltige aluminiumorganische Verbindungen, die Dialkylaluminiummonochloride der Formel $R_2^2AlCl$ oder Alkylaluminiumsesquichloride der Formel $R_3^2Al_2Cl_3$, worin $R^2$ gleiche oder verschiedene Alkylreste mit 1 bis 16 Kohlenstoffatomen sein kann. Als Beispiele seien genannt $(C_2H_5)_2AlCl$, $(iC_4H_9)_2AlCl$, $(C_2H_5)_3Al_2Cl_3$.

Besonders bevorzugt werden als aluminiumorganische Verbindungen chlorfreie Verbindungen eingesetzt. Hierfür eignen sich einerseits die Umsetzungsprodukte von Aluminiumtrialkylen oder Aluminiumdialkylhydriden mit Kohlenwasserstoffresten mit 1 bis 6 Kohlenstoffatomen, vorzugsweise $Al(iC_4H_9)_3$ oder $Al(iC_4H_9)_2H$, mit 4 bis 20 Kohlenstoffatome enthaltenden Diolefinen, vorzugsweise Isopren. Beispielsweise sei Aluminiumisoprenyl genannt.

Andererseits eignen sich als solche chlorfreie aluminiumorganische Verbindungen Aluminiumtrialkyle $AlR^3$ oder Aluminiumdialkylhydride der Formel $AlR_2^3H$, in denen $R^3$ gleiche oder verschiedene Alkylreste mit 1 bis 16 Kohlenstoffatomen bedeutet. Beispiele sind $Al(C_2H_5)_3$, $Al(C_2H_5)_2H$, $Al(C_3H_7)_3$, $Al(C_3H_7)_2H$, $Al(iC_4H_9)_3$, $Al(iC_4H_9)_2H$, $Al(C_8H_{17})_3$, $Al(C_{12}H_{25})_3$, $Al(C_2H_5)\ (C_{12}H_{25})_2$, $Al(iC_4H_9)\ (C_{12}H_{25})_2$.

Es können auch Mischungen von metallorganischen Verbindungen der I. bis III. Gruppe des Periodensystems, insbesondere Mischungen verschiedener aluminiumorganischer Verbindungen eingesetzt werden.

Beispielsweise seien folgende Mischungen genannt :

$Al(C_2H_5)_3$ und $Al(iC_4H_9)_3$, $Al(C_2H_5)_2Cl$ und $Al(C_8H_{17})_3$, $Al(C_2H_5)_3$ und $Al(C_8H_{17})_3$, $Al(C_4H_9)_2H$ und $Al(C_8H_{17})_3$, $Al(iC_4H_9)_3$ und $Al(C_8H_{17})_3$, $Al(C_2H_5)_3$ und $Al(C_{12}H_{25})_3$, $Al(iC_4H_9)_3$ und $Al(C_{12}H_{25})_3$, $Al(C_2H_5)_3$ und $Al(C_{16}H_{33})_3$, $Al(C_3H_7)_3$ und $Al(C_{18}H_{37})_2\ (iC_4H_9)$, $Al(C_2H_5)_3$ und Aluminiumisoprenyl (Umsetzungsprodukt von Isopren mit $Al(iC_4H_9)_3$ oder $Al(iC_4H_9)_2H$.

Das Mischen der Komponente A und der Komponente B kann vor der Polymerisation in einem

Rührkessel bei einer Temperatur von – 30 °C bis 150 C, vorzugsweise – 10 bis 120 °C erfolgen. Es ist auch möglich, die beiden Komponenten direkt im Polymerisationskessel bei einer Polymerisationstemperatur von 20 bis 200 °C zu vereinigen. Die Zugabe der Komponente B kann jedoch auch in zwei Schritten erfolgen, indem vor der Polymerisationsreaktion die Komponente A mit einem Teil der Komponente B bei einer Temperatur von – 30 °C bis 150 °C voraktiviert wird und die weitere Zugabe der Komponente B in dem Polymerisationsreaktor bei einer Temperatur von 20 bis 200 °C erfolgt.

Der erfindungsgemäß zu verwendende Polymerisationskatalysator wird zur Polymerisation von 1-Olefinen der Formel $R^4CH = CH_2$, in der $R^4$ Wasserstoff oder einen Alkylrest mit 1 bis 10 Kohlenstoffatomen bedeutet, eingesetzt, beispielsweise Ethylen, Propylen, Buten-(1), Hexen-(1), 4-Methylpenten-(1), Octen-(1). Vorzugsweise wird Ethylen allein oder als Gemisch von mindestens 70 Gew.-% Ethylen und maximal 30 Gew.-% eines anderen 1-Olefins der obigen Formel polymerisiert. Insbesondere wird Ethylen allein oder ein Gemisch von mindestens 90 Gew.-% Ethylen und maximal 10 Gew.-% eines anderen 1-Olefins der obigen Formel polymerisiert.

Die Polymerisation wird in bekannter Weise in Lösung, in Suspension oder in der Gasphase, kontinuierlich oder diskontinuierlich, ein- oder mehrstufig bei einer Temperatur von 20 bis 200 °C, vorzugsweise 50 bis 150 °C, durchgeführt. Der Druck beträgt 0,5 bis 50 bar. Bevorzugt ist die Polymerisation in dem technisch besonders interessanten Druckbereich von 5 bis 30 bar.

Dabei wird die Komponente A in einer Konzentration, bezogen auf Titan, von 0,000 1 bis 1, vorzugsweise 0,001 bis 0,5 mMol Ti pro Liter Dispergiermittel bzw. pro Liter Reaktorvolumen angewendet. Die metallorganische Verbindung wird in einer Konzentration von 0,1 bis 5 mMol, vorzugsweise 0,5 bis 4 mMol pro Liter Dispergiermittel bzw. pro Liter Reaktorvolumen verwendet. Prinzipiell sind aber auch höhere Konzentrationen möglich.

Die Suspensionspolymerisation wird in einem für das Ziegler-Niederdruckverfahren gebräuchlichen inerten Dispergiermittel durchgeführt, beispielsweise in einem aliphatischen oder cycloaliphatischen Kohlenwasserstoff ; als solcher sei beispielsweise Butan, Pentan, Hexan, Heptan, Isooctan, Cyclohexan, Methylcyclohexan genannt. Weiterhin kann eine Benzin bzw. hydrierte Dieselölfraktion, die sorgfältig von Sauerstoff, Schwefelverbindungen und Feuchtigkeit befreit worden ist, benutzt werden. Das Molekulargewicht des Polymerisats wird in bekannter Weise geregelt ; vorzugsweise wird dazu Wasserstoff verwendet.

Das erfindungsgemäße Verfahren ergibt infolge der hohen Aktivität des zu verwendenden Katalysators Polymerisate mit sehr geringem Titan- und Halogengehalt und daher äußerst guten Werten im Farbbeständigkeits- und Korrosionstest. Ferner ermöglicht es die Herstellung von Polymerisaten mit sehr breiter Molekulargewichtsverteilung ; die Mw/Mn-Werte der Polymerisate liegen über 10.

Ein weiterer entscheidender Vorteil des erfindungsgemäßen Verfahrens ist darin zu sehen, daß es die Herstellung von Polymerisaten mit extrem unterschiedlichen Molekulargewichten allein durch unterschiedliche Wasserstoffkonzentrationen ermöglicht. Beispielsweise entstehen bei der Polymerisation ohne Wasserstoff Polymerisate mit Molekulargewichten über 2 Millionen und bei Wasserstoffgehalten von 70 Vol.-% im Gasraum Polymerisate mit Molekulargewichten im Bereich von 30 000.

Die Polymerisate lassen sich nach dem Extrusions- und Extrusionsblasverfahren zu Hohlkörpern, Rohren, Kabeln und Folien mit glatten Oberflächen bei hohen Durchsatzleistungen verarbeiten.

Aufgrund eines besonderen strukturellen Aufbaues zeichnen sich die aus den erfindungsgemäß erhaltenen Polyolefinen hergestellten Hohlkörper und Flaschen durch eine hohe Unempfindlichkeit gegen Spannungsrißbildung aus.

Weiterhin ermöglicht das erfindungsgemäße Verfahren bei der Suspensions- und Gasphasenpolymerisation die Herstellung von rieselfähigen Polymerisatpulvern mit hohen Schüttdichten, so daß eine direkte Weiterverarbeitung zu Formkörpern ohne Granulierschritt erfolgen kann.

## Beispiele

Bei den nachfolgenden Beispielen wird zur Kontaktherstellung und zur Polymerisation eine hydrierte Dieselölfraktion mit einem Siedebereich von 130 bis 170 °C verwendet.

Der Titangehalt der Katalysatoren wird kolorimetrisch bestimmt (Lit. G.O. Müller, Praktikum der quantitativen chemischen Analyse 4. Auflage (1957) S. 243).

Der Schmelzindex MFI wird nach DIN 53 735 (E) bestimmt.

Die Mw/Mn-Werte werden aus den Fraktionierdaten eines Gelpermeationschromatographen in 1,2,4-Trichlorbenzol als Lösungs- und Elutionsmittel bei 130 °C ermittelt.

Die Viskosität VZ wird nach DIN 53 728 Blatt 4 mit einem Ubbelohde-Viskosimeter in Dekahydronaphthalin als Lösungsmittel bestimmt.

Die Bestimmung der Dichte erfolgt nach DIN 53 479, die der Schüttdichte nach DIN 53 468.

## Beispiel 1

a) Herstellung der Komponente A

114,3 g Magnesiumethylat werden in einem 3 l Vierhalskolben mit Tropftrichter, KPG-Rührer,

Rückflußkühler und Thermometer in 1,5 l einer Dieselölfraktion unter $N_2$-Überlagerung dispergiert. Zu dieser Dispersion werden innerhalb von 2 h bei 90 °C 332 g Titantetrachlorid getropft. Danach wird auf 130 °C erwärmt und 60 h bei dieser Temperatur gerührt. Zum Abtreiben gasförmiger Reaktionsprodukte wird während der gesamten Reaktionszeit ein schwacher $N_2$-Strom über das Reaktionsgemisch und anschließend durch eine mit Methanol-Trockeneis gekühlte Kühlfalle geleitet. Nach 60 h ist die Abspaltung von gasförmigen Reaktionsprodukten beendet. In der Kühlfalle befinden sich 116 g einer wasserklaren Flüssigkeit folgender Zusammensetzung : Cl = 55 Gew.-%, C = 37 Gew.-% und H = 8 Gew.-%. Es handelt sich um Ethylchlorid. Anschließend wird das Umsetzungsprodukt mit der oben erwähnten Dieselölfraktion gewaschen, bis die überstehende Lösung kein Titan mehr enthält.

Nach dem Trocknen hat der Feststoff (Komponente A) folgende analytische Zusammensetzung :

Ti 25,4 Gew.-%
Mg 9,5 Gew.-%
Cl 50,2 Gew.-%.

Das Atomverhältnis Cl : Ti beträgt 2,67.

b) Voraktivierung der Komponente A

19 g der Komponente A werden mit Dieselöl auf 190 ml aufgefüllt und bei 20 °C unter Rühren mit 100 ml einer Aluminiumtriisobutyllösung, die 1 Mol $Al(iC_4H_9)_3$ pro 1 l Lösung enthält, versetzt. Dadurch wird 45 Gew.-% des vierwertigen Titans zu Titan (III) reduziert.

c) Ethylenpolymerisation in Suspension

In einem 150 l Kessel werden 100 l Dieselöl, 30 mMol Aluminiumtriisobutyl und 8,7 ml der unter b) beschriebenen Dispersion gegeben. Anschließend werden bei einer Polymerisationstemperatur von 85 °C 5 kg Ethylen pro Stunde und soviel $H_2$ eingeleitet, daß der $H_2$-Gehalt im Gasraum 55 Vol.-% beträgt. Nach 6 Stunden wird die Polymerisation bei einem Druck von 25,3 bar durch Entspannen beendet. Die Suspension wird filtriert und das Polyethylenpulver durch Überleiten von heißem Stickstoff getrocknet.

Es werden 28,7 kg Polyethylen erhalten. Dies entspricht einer Kontaktaktivität von 50,4 kg PE/g Katalysatorfeststoff (Komponente A) oder 9,5 kg PE/mMol Ti. Das Polyethylenpulver besitzt einen MFI 190/5 von 0,54 g/10 min. Die Molekulargewichtsverteilungsbreite Mw/Mn ist 22, der MFI 190/15/MFI 190/5 beträgt 11,5. Die Dichte ist 0,955 g/cm³ und die Schüttdichte des Pulvers ist 0,49 g/cm³.

## Beispiel 2

Ethylenpolymerisation in Suspension

Unter den gleichen Bedingungen wie im Beispiel 1c) beschrieben werden in den Kessel 100 mMol Aluminiumtriisobutyl und 2,2 ml der im Beispiel 1b) beschriebenen Dispersion gegeben. Anschließend werden bei einer Polymerisationstemperatur von 75 °C 5 kg Ethylen pro Stunde eingeleitet. Nach 6 Stunden wird die Polymerisation bei einem Druck von 24,8 bar durch Entspannen beendet. Die Suspension wird filtriert und das Polyethylenpulver durch Überleiten von heißem Stickstoff getrocknet. Man erhält 27,9 kg Polyethylen. Das entspricht einer Kontaktaktivität von 194 kg PE/g Katalysatorfeststoff oder 36,5 kg PE/mMol Ti. Das Polyethylenpulver hat eine VZ von 2 400 ml/g ; das entspricht einem Molekulargewicht von 2 Millionen. Die Schüttdichte liegt bei 0,45 g/cm³.

## Beispiel 3

Ethylenpolymerisation in Suspension

Unter den gleichen Bedingungen wie im Beispiel 1c) beschrieben werden in den Kessel 100 mMol Aluminiumtriisobutyl und 29 ml der im Beispiel 1b) beschriebenen Dispersion gegeben. Anschließend werden bei einer Polymerisationstemperatur von 85 °C 4 kg Ethylen pro Stunde und soviel $H_2$ eingeleitet, daß der $H_2$-Gehalt im Gasraum 75 Vol.-% beträgt. Nach 6 Stunden wird die Polymerisation bei einem Druck von 25,6 bar durch Entspannen beendet. Die Suspension wird filtriert und das Polyethylenpulver durch Überleiten von heißem Stickstoff getrocknet. Es wurden 23,6 kg Polyethylen isoliert. Dies entspricht einer Kontaktausbeute von 12,4 kg PE/g Katalysatorfeststoff oder 2,3 kg PE/mMol Ti. Das Polyethylen hat einen MFI 190/5 von 105 g/10 min, eine VZ von 110 ml/g, eine Dichte von 0,965 g/cm³ und eine Schüttdichte von 0,50 g/cm³. Die Molekulargewichtsverteilungsbreite Mw/Mn beträgt 25.

## Beispiel 4

Ethylen-Decen-1-Copolymerisation in Suspension

In einem 1,5 l Stahlautoklaven werden 750 ml Hexan, 5 mMol Aluminiumisoprenyl und 2,9 mg der gemäß Beispiel 1b) erhaltenen Komponente A gegeben. Anschließend werden bei einer Polymerisationstemperatur von 85 °C 8 bar $H_2$ und 14 bar Ethylen aufgedrückt. Das Ethylen wird in der Menge nachdosiert, daß ein Gesamtdruck von 22 bar aufrechterhalten wird. Gleichzeitig werden 20 ml Decen-1 pro Stunde zudosiert. Nach 6 h wird der Versuch abgebrochen. Das Copolymerisat wird durch Filtration abgetrennt und im Vakuumtrokkenschrank getrocknet. Es werden 156 g Copolymerisat erhalten. Dies entspricht einer Kontaktausbeute von 53,8 kg Polymeres/g Katalysatorfeststoff oder 10,1 kg Polymeres/mMol Ti. Das Ethylen-Decen-1-Copolymerisat besitzt einen Schmelzindex MFI 190/5 von 0,68 g/10 min und eine Dichte von 0,950 g/cm³.

Beispiel 5

Ethylen-Hexen-1-Copolymerisation in Suspension

In einem 500 l Kessel werden 360 l Hexan, 360 mMol Aluminiumisoprenyl und 58 ml der im Beispiel 1b) beschriebenen Dispersion vorgelegt. Danach wird bei einer Polymerisationstemperatur von 85 °C 17 kg Ethylen/Stunde, 2 l Hexen-1/Stunde und soviel $H_2$ eingeleitet, daß sich im Gasraum ein $H_2$-Gehalt von 45 Vol.-% einstellt.

Nach 6 Stunden ist der Polymerisationsdruck auf 8,2 bar angestiegen und die Polymerisation wird durch Entspannen abgebrochen. Das Polymerisatpulver wird durch Filtration abgetrennt und mit heißem Stickstoff getrocknet. Es werden 100,4 kg Polymerisat erhalten. Das entspricht einer Kontaktausbeute von 26,4 kg Polymeres/g Katalysatorfeststoff oder 5,0 kg Polymeres/mMol Ti.

Das Ethylen-Hexen-1-Copolymerisat besitzt einen Schmelzindex MFI 190/5 von 0,9 g/10 min, ein Verhältnis MFI 190/15/MFI 190/5 von 9,8, eine Dichte von 0,942 g/cm³ und eine Schüttdichte von 0,42 g/cm³.

Auf einer Flaschen-Blasanlage (Extruderschnecke : D = 60 mm) werden aus dem Pulver Flaschen hergestellt. Bei einer Schneckendrehzahl von 40 Upm wird ein sehr hoher Ausstoß von 62 kg/h erhalten. Die Flaschen zeigen eine sehr glatte Oberfläche und zeigen im Spannungsrißtest nach Bell eine sehr hohe Spannungsrißbeständigkeit von größer 1 000 h.

Beispiel 6

Ethylen-Buten-1-Copolymerisation in Suspension

Unter den gleichen Bedingungen wie im Beispiel 5 beschrieben werden 720 mMol Aluminiumtriisobutyl und 58 ml der im Beispiel 1b) beschriebenen Dispersion zugegeben. Bei 65 °C werden 17 kg Ethylen pro Stunde und 4 l Buten-1 pro Stunde zugegeben. Es wird soviel $H_2$ eingeleitet, daß sich davon im Gasraum 40 Vol.-% befinden. Nach 6 h wird die Polymerisation bei einem Enddruck von 6,7 bar durch Entspannen abgebrochen.

Die Suspension wird auf Raumtemperatur abgekühlt und der Feststoff durch Filtration abgetrennt und mit heißem $N_2$ getrocknet.

Es werden 108,4 kg Produkt mit einem MFI 190/5 von 1,8 g/10 min, einem MFI 190/15/MFI 190/5 von 10,4, einer Dichte von 0,920 g/cm³ und einer Schüttdichte von 0,30 g/cm³ erhalten. Das entspricht einer Kontaktausbeute von 28,5 kg Copolymeres/g Katalysatorfeststoff oder 5,4 kg Copolymeres/mMol Ti.

Beispiel 7

Gasphasenpolymerisation von Ethylen

In einem liegenden 20 l Reaktor mit wandgängigem Rührer werden 500 g Polyethylenpulver (MFI 190/5 = 1,5 g/10 min, Schüttdichte = 0,45 g/cm³) vorgelegt. Der Reaktor wird durch mehrmaliges Evakuieren und mehrstündiges Spülen mit Ethylen von Luft befreit und dann auf 80 °C erwärmt. In den Reaktor werden 50 mMol Aluminiumtriisobutyl und 94,3 mg der gemäß Beispiel 1a) hergestellten Katalysatorkomponente A gegeben.

Es werden 400 g Ethylen/h und soviel Wasserstoff eingeleitet, daß der Wasserstoffanteil im Gasraum während der Polymerisation immer 30 Vol.-% beträgt. Der Druck steigt während der Reaktionszeit auf 15 bar an. Nach 12,5 h wird die Polymerisation abgebrochen. Es werden 5,4 kg Polyethylen mit einem MFI 190/5-Wert von 0,6 g/10 min erhalten. Das entspricht einer Kontaktausbeute von 52 kg PE/g Katalysatorfeststoff oder 9,8 kg PE/mMol Ti.

Vergleichsbeispiel A

a) Herstellung der Komponente A

114,3 g Magnesiumethylat werden in einem 3 l Vierhalskolben mit Tropftrichter, KPG-Rührer,

Rückflußkühler und Thermometer in 1,5 l einer Dieselölfraktion unter $N_2$-Überlagerung dispergiert. Zu dieser Dispersion werden innerhalb von 2 h bei 90 °C 332 g Titantetrachlorid getropft. Anschließend wird das Reaktionsprodukt mit der Dieselölfraktion gewaschen, bis die überstehende Lösung kein Titan mehr enthält. Nach dem Trocknen besitzt der Feststoff (Komponente A) folgende analytische Zusammensetzung :

Ti 4,9 Gew.-%
Mg 19,8 Gew.-%
Cl 61,3 Gew.-%.

b) Voraktivierung der Komponente A

98 g der Komponente A werden in soviel Dieselöl suspendiert, daß das Volumen der Suspension 190 ml beträgt, und bei 20 °C unter Rühren mit 100 ml einer Aluminiumtriisobutyl-Lösung, die 1 Mol $Al(iC_4H_9)_3$ pro 1 l enthält, versetzt. Dadurch wird 52 Gew.-% des vierwertigen Titan zu Titan(III) reduziert.

c) Ethylenpolymerisation in Suspension

In einem 150 l Kessel werden 100 l Hexan, 30 mMol Aluminiumtriisobutyl und 14,5 ml der unter b) beschriebenen Suspension gegeben. Danach werden bei 85 °C 5 kg Ethylen/Stunde und soviel $H_2$ eingeleitet, daß sich im Gasraum ein Wasserstoffgehalt von 30 Vol.-% einstellt. Nach 6 h wird die Polymerisation bei einem Druck von 4,6 bar durch Entspannen abgebrochen. Es werden 29,6 kg Polyethylen erhalten. Das entspricht einer Kontaktausbeute von 6,1 kg/g Katalysatorfeststoff oder 5,9 kg PE/mMol Ti.

Das Produkt hat einen MFI 190/5-Wert von 1,6 g/10 min, einen MFI 190/15/MFI 190/5-Wert von 5,2, eine Dichte von 0,956 g/cm$^3$ und eine Schüttdichte von 0,42 g/cm$^3$. Das Produkt besitzt eine enge Molekulargewichtsverteilung : Mw/Mn = 4,7.

Bei der Verarbeitung des Pulvers auf der auch im Beispiel 5 verwendeten Holkörper-Blasanlage erhält man bei einer Schneckendrehzahl von 40 Upm einen Ausstoß von 43 kg/h. Die Flaschen zeigen eine rauhe Oberfläche, da beim Verarbeiten « melt fracture » auftritt. Die Spannungsrißbeständigkeit der Flaschen im Test nach Bell beträgt 68 Stunden.

d) Ethylenpolymerisation in Suspension

In einem 150 l Kessel werden 100 l Dieselöl, 30 mMol Aluminiumtriisobutyl und 8,7 ml der unter b) beschriebenen Dispersion gegeben. Anschließend werden bei einer Polymerisationstemperatur von 85 °C 5 kg Ethylen pro h und soviel $H_2$ eingeleitet, daß der $H_2$-Gehalt im Gasraum 55 Vol.-% beträgt. Nach 6 h wird die Polymerisation bei einem Druck von 20,4 bar durch Entspannen beendet. Die Suspension wird filtriert und das Polyethylenpulver durch Überleiten von heißem Stickstoff getrocknet.

Man erhält 28,2 kg Polyethylen. Dies entspricht einer Kontaktaktivität von 9,6 kg PE/g Katalysatorfeststoff oder 9,4 kg PE/mMol Ti. Das Polymerpulver besitzt einen MFI 190/5 von 28 g/10 min. Die Molekulargewichtsverteilungsbreite $M_w/M_n$ ist 4,6, der MFI 190/15/MFI 190/5 beträgt 5,4. Die Dichte ist 0,960 g/cm$^3$ und die Schüttdichte des Pulvers ist 0,41 g/cm$^3$.

## Beispiel 8

a) Herstellung der Komponente A

114,3 g Magnesiumethylat werden in einem 3 l Vierhalskolben mit Tropftrichter, KPG-Rührer, Rückflußkühler und Thermometer in 1,5 l einer Dieselölfraktion unter $N_2$-Überlagerung dispergiert. Zu dieser Dispersion werden innerhalb von 2 h bei 90 °C 569 g Titantetrachlorid getropft. Danach wird auf 130 °C erwärmt und 60 h bei dieser Temperatur gerührt. Zum Abtreiten gasförmiger Reaktionsprodukte wird während der gesamten Reaktionszeit ein schwacher $N_2$-Strom über das Reaktionsgemisch und anschließend durch eine mit Methanol-Trockeneis gekühlte Kühlfalle geleitet. Nach 60 h ist die Abspaltung von gasförmigen Reaktionsprodukten beendet. In der kühlfalle befinden sich 107 g einer wasserklaren Flüssigkeit folgender Zusammensetzung : Cl = 55 Gew.-%, C = 37 Gew.-% und H = 8 Gew.-%. Es handelt sich um Ethylchlorid. Anschließend wird das Umsetzungsprodukt mit der Dieselölfraktion gewaschen, bis die überstehende Lösung kein Titan mehr enthält.

Nach dem Trocknen hat der Feststoff (Komponente A) folgende analytische Zusammensetzung :

Ti 24,7 Gew.-%
Mg 9,7 Gew.-%
Cl 51,2 Gew.-%

Das Atomverhältnis Cl : Ti beträgt 2,80.

b) Voraktivierung der Komponente A

19,4 g der Komponente A werden mit Dieselöl auf 190 ml aufgefüllt und bei 20 °C unter Rühren mit 100 ml einer Aluminiumtriisobutyllösung, die 1 Mol $Al(iC_4H_9)_3$ pro 1 l enthält, versetzt. Dadurch wird 47 Gew.-% des vierwertigen Titans zu Titan-(III) reduziert.

c) Ethylenpolymerisation in Suspension

In einem 150 l Kessel werden 100 l Dieselöl, 25 mMol Aluminiumtriisobutyl und 8,0 ml der unter b) beschriebenen Dispersion gegeben. Anschließend werden bei einer Polymerisationstemperatur von 85 °C 5 kg Ethylen pro Stunde und soviel $H_2$ eingeleitet, daß der $H_2$-Gehalt im Gasraum 55 Vol.-% beträgt. Nach 6 Stunden wird die Polymerisation bei einem Druck von 22,4 bar durch Entspannen beendet. Die Suspension wird filtriert und das Polyethylenpulver durch Überleiten von heißem Stickstoff getrocknet.

Es werden 27,5 kg Polyethylen erhalten. Dies entspricht einer Kontaktaktivität von 51,4 kg PE/g Katalysatorfeststoff oder 10 kg PE/mMol Ti. Das Polyethylenpulver besitzt einen MFI 190/5 von 0,94 g g/10 min. Die Molekulargewichtsverteilungsbreite Mw/Mn ist 26, der MFI 190/15/MFI 190/5 beträgt 11,9. Die Dichte ist 0,956 $g/cm^3$ und die Schüttdichte des Pulvers ist 0,47 $g/cm^3$.

Beispiel 9

a) Herstellung der Komponente A

142,3 g Magnesiumisopropylat werden in einem 3 l Vierhalskolben mit Tropftrichter, KPG-Rührer, Rückflußkühler und Thermometer in 1,0 l einer Dieselölfraktion unter $N_2$-Überlagerung dispergiert. Zu dieser Dispersion werden innerhalb von 4 h bei 75 °C 285 g Titantetrachlorid getropft. Danach wird auf 110 °C erwärmt und 60 h bei dieser Temperatur gerührt. Zum Abtreiben gasförmiger Reaktionsprodukte wird während der gesamten Reaktionszeit ein schwacher $N_2$-Strom über das Reaktionsgemisch und anschließend durch eine mit Methanol-Trockeneis gekühlte Kühlfalle geleitet. Nach 60 h ist die Abspaltung von gasförmigen Reaktionsprodukten beendet. In der Kühlfalle befinden sich 156 g einer wasserklaren Flüssigkeit folgender Zusammensetzung : Cl = 45 Gew.-%, C = 46 Gew.-% und H = 8,9 Gew.-%. Es handelt sich um Isopropylchlorid. Anschließend wird das Umsetzungsprodukt mit der oben erwähnten Dieselölfraktion gewaschen, bis die überstehende Lösung kein Titan mehr enthält.

Nach dem Trocknen enthält der Feststoff (Komponente A) :

Ti 26,6 Gew.-%
Mg 9,0 Gew.-%
Cl 52,5 Gew.-%.

Das Atomverhältnis Cl : Ti beträgt 2,67.

b) Ethylenpolymerisation in Suspension

In einem 150 l Kessel werden 100 l Dieselöl, 100 mMol Aluminiumisoprenyl und 900 mg des unter a) beschriebenen Katalysatorfeststoffes gegeben. Anschließend werden bei einer Polymerisationstemperatur von 85 °C 5 kg Ethylen pro Stunde und soviel $H_2$ eingeleitet, daß der $H_2$-Gehalt im Gasraum 55 Vol.-% beträgt. Nach 6 Stunden wird die Polymerisation bei einem Druck von 23,8 bar durch Entspannen beendet. Die Suspension wird filtriert und das Polyethylenpulver durch Überleiten von heißem Stickstoff getrocknet.

Es werden 29,1 kg Polyethylen erhalten. Dies entspricht einer Kontaktaktivität von 32,3 kg PE/g Katalysatorfeststoff oder 5,8 kg PE/mMol Ti. Das Polyethylenpulver besitzt einen MFI 190/5 von 0,36 g/10 min. Die Molekulargewichtsverteilungsbreite Mw/Mn ist 28, der MFI 190/15/MFI 190/5 beträgt 12,7. Die Dichte ist 0,954 $g/cm^3$ und die Schüttdichte des Pulvers ist 0,39 $g/cm^3$.

Beispiel 10

a) Herstellung der Komponente A

250,3 g $Na_2[Mg(OC_2H_5)_4]$ (H. Meerwein, T. Bersin, Liebigs Annalen der Chemie *476*, 113 (1929)) werden in einem 3 l Vierhalskolben mit Tropftrichter, KPG-Rührer, Rückflußkühler und Thermometer in 2,0 l einer Dieselölfraktion unter $N_2$-Überlagerung dispergiert. Zu dieser Dispersion werden innerhalb von 4 h bei 80 °C 759 g Titantetrachlorid getropft. Danach wird auf 145 °C erwärmt und 60 h bei dieser Temperatur gerührt. Zum Abtreiben gasförmiger Reaktionsprodukte wird während der gesamten Reaktionszeit ein schwacher $N_2$-Strom über das Reaktionsgemisch und anschließend durch eine mit Methanol-Trockeneis gekühlte Kühlfalle geleitet. Nach 60 h ist die Abspaltung von gasförmigen Reaktionsprodukten beendet. In der Kühlfalle befinden sich 118 g einer wasserklaren Flüssigkeit

folgender Zusammensetzung : Cl = 55 Gew.-%, C = 37 Gew.-% und H = 8 Gew.-%. Es handelt sich um Ethylchlorid. Anschließend wird das Umsetzungsprodukt mit der oben erwähnten Dieselölfraktion gewaschen, bis die überstehende Lösung kein Titan mehr enthält.

Nach dem Trocknen besitzt der Feststoff (Komponente A) folgende analytische Zusammensetzung :

Ti 16,9 Gew.-%
Mg 6,6 Gew.-%
Cl 52,9 Gew.-%.

b) Ethylenpolymerisation in Suspension

In einem 150 l Kessel werden 100 l Dieselöl, 30 mMol Aluminiumtriisobutyl und 1 417 mg des unter a) beschriebenen Katalysatorfeststoffes gegeben. Anschließend werden bei einer Polymerisationstemperatur von 85 °C 5 kg Ethylen pro Stunde und soviel $H_2$ eingeleitet, daß der $H_2$-Gehalt im Gasraum 65 Vol.-% beträgt. Nach 6 Stunden wird die Polymerisation bei einem Druck von 21,7 bar durch Entspannen beendet. Die Suspension wird filtriert und das Polyethylenpulver durch Überleiten von heißem Stickstoff getrocknet.

Es werden 28,2 kg Polyethylen erhalten. Dies entspricht einer Kontaktaktivität von 19,9 kg PE/g Katalysatorfeststoff oder 7,1 kg PE/mMol Ti. Das Polyethylenpulver besitzt einen MFI 190/5 von 3,2 g/10 min. Die Molekulargewichtsverteilungsbreite Mw/Mn ist 21, der MFI 190/15/MFI 190/5 beträgt 10,5. Die Dichte ist 0,955 g/cm$^3$ und die Schüttdichte des Pulvers ist 0,49 g/cm$^3$.

**Patentansprüche**

1. Verfahren zur Herstellung eines Polymerisationskatalysators, der aus dem Umsetzungsprodukt eines Magnesiumalkoholats mit Titantetrachlorid (Komponente A) und einer metallorganischen Verbindung der Gruppe I bis III des Periodensystems (Komponente B) besteht, dadurch gekennzeichnet, daß man zur Herstellung der Komponente A in einer ersten Reaktionsstufe ein Magnesiumalkoholat mit Titantetrachlorid in einem inerten Kohlenwasserstoff bei einer Temperatur von 50 bis 100 °C umsetzt, das gebildete Reaktionsgemisch in einer zweiten Reaktionsstufe bei einer Temperatur von 110 bis 200 °C einer thermischen Behandlung unterwirft, bis keine Alkylchloridabspaltung mehr erfolgt, und danach den Feststoff durch mehrmaliges Waschen mit einem Kohlenwasserstoff von löslichen Reaktionsprodukten befreit.

2. Verfahren nach Anspruch 1, dadurch gekennzeichnet, daß man zur Herstellung der komponente A in der ersten Reaktionsstufe ein Magnesiumalkoholat der Formel $Mg(OR)_2$, in der R gleiche oder verschiedene Alkylreste mit 1 bis 6 Kohlenstoffatomen bedeutet, verwendet.

3. Verfahren nach Anspruch 1, dadurch gekennzeichnet, daß man zur Herstellung der Komponente A in der ersten Reaktionsstufe ein komplexes Magnesiumalkoholat, das neben Magnesium mindestens ein Metall der 1. bis 4. Hauptgruppe des Periodensystems enthält, verwendet.

4. Verwendung des nach den Ansprüchen 1 bis 3 hergestellten Polymerisationskatalysators zur Polymerisation von 1-Olefinen der Formel $R^4CH=CH_2$, in der $R^4$ Wasserstoff oder einen Alkylrest mit 1 bis 10 Kohlenstoffatomen bedeutet.

5. Verfahren zur Polymerisation eines 1-Olefins der Formel $R^4CH=CH_2$, in der $R^4$ Wasserstoff oder einen Alkylrest mit 1 bis 10 Kohlenstoffatomen bedeutet, in Gegenwart eines Katalysators, der nach dem Verfahren gemäß Anspruch 1 hergestellt wurde.

6. Verfahren nach Anspruch 5 in Gegenwart eines Katalysators, der nach dem Verfahren gemäß Anspruch 2 hergestellt wurde.

7. Verfahren nach Anspruch 5 in Gegenwart eines Katalysators, der nach dem Verfahren gemäß Anspruch 3 hergestellt wurde.

**Claims**

1. A process for the preparation of a polymerization catalyst composed of the product from the reaction of a magnesium alcoholate with titanium tetrachloride (component A) and an organometallic compound of Groups I to III of the periodic system (component B), which comprises preparing the component A by reacting, in a first reaction stage, a magnesium alcoholate with titanium tetrachloride in an inert hydrocarbon at a temperature of 50 to 100 °C, subjecting, in a second reaction stage, the reaction mixture which has been formed to a heat treatment at a temperature of 110 to 200 °C until no further alkyl chloride is split off, and then freeing the solid from soluble reaction products by washing it several times with a hydrocarbon.

2. The process as claimed in Claim 1, wherein the component A is prepared by reacting, in the first reaction stage, a magnesium alcoholate of the formula $Mg(OR)_2$ in which R denotes identical or different alkyl radicals having 1 to 6 carbon atoms.

3. The process as claimed in Claim 1, wherein the component A is prepared by reacting, in the first reaction stage, a complex magnesium alcoholate which, as well as magnesium, contains at least one metal of the 1st to 4th main group of the periodic system.

4. Use of the polymerization catalyst prepared as claimed in Claims 1 to 3 for the polymerization of 1-olefins of the formula $R^4CH{=}CH_2$ in which $R^4$ denotes hydrogen or an alkyl radical having 1 to 10 carbon atoms.

5. A process for the polymerization of a 1-olefin of the formula $R^4CH{=}CH_2$ in which $R^4$ denotes hydrogen or an alkyl radical having 1 to 10 carbon atoms, in the presence of a catalyst which has been prepared according to the process of Claim 1.

6. The process of Claim 5 in the presence of a catalyst which has been prepared according to the process of Claim 2.

7. The process of Claim 5 in the presence of a catalyst which has been prepared according to the process of Claim 3.

## Revendications

1. Procédé de préparation d'un catalyseur de polymérisation constitué d'un produit résultant de la réaction d'un alcoolate de magnésium avec le tétrachlorure de titane (composante A) et d'un composé organo-métallique d'un métal appartenant à l'un des groupes I à III de la classification périodique (composante B), procédé caractérisé en ce que, pour préparer la composante A, on fait réagir, dans une première étape réactionnelle, un alcoolate de magnésium avec le tétrachlorure de titane, dans un hydrocarbure inerte, à une température de 50 à 100 °C, on soumet le mélange réactionnel formé, dans une seconde étape réactionnelle, à un traitement par la chaleur à une température de 110 à 200 °C jusqu'à ce qu'il ne se produise plus d'enlèvement de chlorure d'alkyle, et ensuite on élimine les produits réactionnels solubles de la matière solide en la lavant plusieurs fois avec un hydrocarbure.

2. Procédé selon la revendication 1, caractérisé en ce que, pour préparer la composante A, on utilise, dans la première étape réactionnelle, un alcoolate de magnésium de formule $Mg(OR)_2$ dans lequel les R représentent des radicaux alkyles, identiques ou différents, contenant chacun de 1 à 6 atomes de carbone.

3. Procédé selon la revendication 1, caractérisé en ce que, pour préparer la composante A, on utilise, dans la première étape réactionnelle, un alcoolate de magnésium complexe qui, en plus du magnésium, contient au moins un métal appartenant à l'un des groupes principaux I à IV de la classification périodique.

4. Application du catalyseur de polymérisation préparé selon l'une quelconque des revendications 1 à 3, à la polymérisation d'$\alpha$-oléfines répondant à la formule $R^4CH{=}CH_2$ dans laquelle $R^4$ représente l'hydrogène ou un radical alkyle contenant de 1 à 10 atomes de carbone.

5. Procédé pour polymériser une $\alpha$-oléfine de formule $R^4CH{=}CH_2$ dans laquelle $R^4$ représente l'hydrogène ou un radical alkyle contenant de 1 à 10 atomes de carbone, en présence d'un catalyseur, procédé selon lequel on utilise un catalyseur qui a été préparé par le procédé de la revendication 1.

6. Procédé selon la revendication 5, selon lequel on opère en présence d'un catalyseur qui a été préparé par le procédé de la revendication 2.

7. Procédé selon la revendication 5, selon lequel on opère en présence d'un catalyseur qui a été préparé par le procédé de la revendication 3.